(19) Europäisches Patentamt
European Patent Office
Office européen des brevets

(11) **EP 1 671 093 B1**

(12) **EUROPÄISCHE PATENTSCHRIFT**

(45) Veröffentlichungstag und Bekanntmachung des Hinweises auf die Patenterteilung:
**10.03.2010 Patentblatt 2010/10**

(21) Anmeldenummer: **04761051.4**

(22) Anmeldetag: **30.09.2004**

(51) Int Cl.:
**G01M 15/00** (2006.01)

(86) Internationale Anmeldenummer:
**PCT/AT2004/000329**

(87) Internationale Veröffentlichungsnummer:
**WO 2005/033649 (14.04.2005 Gazette 2005/15)**

(54) **VERFAHREN ZUR ABSICHERUNG DER ZUVERLÄSSIGKEIT VON TECHNISCHEN BAUTEILEN**

METHOD FOR ENSURING THE RELIABILITY OF TECHNICAL COMPONENTS

PROCEDE POUR GARANTIR LA FIABILITE DE COMPOSANTS TECHNIQUES

(84) Benannte Vertragsstaaten:
**AT BE BG CH CY CZ DE DK EE ES FI FR GB GR HU IE IT LI LU MC NL PL PT RO SE SI SK TR**

(30) Priorität: **09.10.2003 AT 6952003 U**

(43) Veröffentlichungstag der Anmeldung:
**21.06.2006 Patentblatt 2006/25**

(73) Patentinhaber: **AVL List GmbH**
**8020 Graz (AT)**

(72) Erfinder: **DENKMAYR, Klaus**
**A-8020 GRAZ (AT)**

(74) Vertreter: **Babeluk, Michael et al**
**Patentanwalt**
**Mariahilfer Gürtel 39/17**
**1150 Wien (AT)**

(56) Entgegenhaltungen:
**US-B1- 6 260 998**

• **DENKMAYR K ED - INSTITUTE OF ELECTRICAL AND ELECTRONICS ENGINEERS: "AVL's reliability engineering process for engine development" ANNUAL REALIABILITY AND MAINTAINABILITY SYMPOSIUM.2003 PROCEEDINGS. THE INTERNATIONAL SYMPOSIUM ON PRODUCT QUALITY AND INTEGRITY. (RAMS). TAMPA FL, JAN. 27 - 30, 2003, ANNUAL RELIABILITY AND MAINTAINABILITY SYMPOSIUM, NEW YORK, NY : IEEE, US, 27. Januar 2003 (2003-01-27), Seiten 455-458, XP010628659 ISBN: 0-7803-7717-6**
• **W.Q. MEEKER, L.A ESCOBAR: "Reliability: The Other Dimension of Quality"[Online] 1. Juli 2003 (2003-07-01), XP002317929 Gefunden im Internet: URL:http://www.stat.iastate.edu/preprint/articles/2003-14.pdf> [gefunden am 2005-02-16]**
• **DENKMAYR K ET AL: "DIE LOAD-MATRIX DER SCHLUESSEL ZUM INTELLIGENTEN DAUERLAUF" MTZ MOTORTECHNISCHE ZEITSCHRIFT, FRANCKH'SCHE VERLAGSHANDLUNG,ABTEILUNG TECHNIK. STUTTGART, DE, Bd. 64, Nr. 11, November 2003 (2003-11), Seiten 924-926,928, XP001186390 ISSN: 0024-8525**

# EP 1 671 093 B1

**Beschreibung**

Die Erfindung betrifft ein Verfahren zur Absicherung der Zuverlässigkeit von technischen Bautellen, insbesondere von Brennkraftmaschinen und deren Teile, mit einem Testprogramm.

Fahrzeugbesitzer erwarten von jeder neuen Motorgeneration höhere Leistung, geringeren Kraftstoffverbrauch und reduzierte Emissionen bei höchster Zuverlässigkeit. Gleichzeitig drängen die Fahrzeughersteller auf verkürzte Entwicklungszeiten. In diesem Spannungsfeld kommt der Zuverlässigkeitssicherung während des Entwicklungsprozesses eine besonders wichtige Bedeutung zu.

Aus der Veröffentlichung "Der AVL-Reliability-Engineering-Prozess für die Motor- und Antriebsstrangentwicklung", Klaus DENKMAYR, VDI-Berichte 1713, 2002, Seiten 27 bis 32 ist es bekannt, die Schädigung von Aggregaten, Bauteilen bzw. Baugruppen in einer Belastungsmatrix darzustellen. Ähnliches offenbart auch die Veröffentlichung "AVL's Reliability Process for Engine Development", Klaus DENKMAYR, 2003 Proceedings Annual Reliability and Maintainabllity Symposium on product quality and integrity, Tampa FI, Jan. 27-30 2003, p 455-458. Mittels Testprogrammen, Insbesondere unterschiedlicher Dauerlauftests können verschiedene Motorelgenschaften abgeprüft werden, wobei verschiedene Motorsubsysteme höchst unterschiedlich belastet werden. Beispielsweise wird in einem Thermoschocktest der Zylinderkopf hoch belastet, während die Kurbelwelle weniger belastet wird. Um die unterschiedlichen Belastungen darzustellen und mögliche Schwachstellen im Testprogramm aufzudecken, wurde in dieser Veröffentlichung die sogenannte Load-Matrix (Belastungsmatrix) eingeführt. Die Belastungsmatrix gibt dabei an, wie hoch der jeweilige Dauerlauf der Subsysteme im Vergleich zum typischen praktischen Einsatz während der Nominallebensdauer belastet.

Als Zuverlässigkeitsindex wird bei Verbrennungsmotoren meist die $B_{10}$-Lebensdauer verwendet, die jede Laufleistung angibt, bis zu der 10% der Gesamtpopulation einer Motorengruppe einen schwerwiegenden Defekt aufweist. Je nach Anwendung wird der $B_{10}$-Wert in Kilometern, Meilen oder Betriebsstunden angegeben.

Ein weiterer wichtiger Zuverlässigkeitsparameter ist die sogenannte Repair-Frequency, welche die Häufigkeit von Defekten von Bauteilen oder Baugruppen pro Garantiejahr angibt. Die Zuverlässigkeitsparameter $B_{10}$-Lebensdauer und Repair-Frequency haben maßgebend Einfluss auf Kosten durch Garantie- und Kulanzleistungen für Motoren- und Fahrzeughersteller. Kürzere Entwicklungszeiten, härtere Einsatzprofile und steigende Garantie- und Kulanzzeiten bewirken, dass der Zuverlässlgkeltsabsicherung von Bauteilen und Baugruppen immer größere Bedeutung zukommt.

Die US 6,260,998 B1 beschreibt ein Verfahren zum Testen eines elektronischen Moduls hinsichtlich Auflötfehler, welche durch thermische Spannungen verursacht werden. Dabei wird ein thermisches Schock-Dauertestprofil bestimmt, welches die Feldtemperaturbedingungen repräsentiert. Es wird/werden die Zeit/Zyklen bis zum Versagen der Lötverbindungen im elektronischen Modul unter Verwendung von numerischen Simulationstechniken bestimmt, eine Auslegungslebensdauer des Moduls ausgewählt und die Auslegungslebensdauer mit der berechneten Zeit/Zyklen bis zum Versagen der schwächsten Lötverbindung verglichen und zwischen robuster, gering robuster und nicht robuster Modulauslegung auf Grund der Auslegungslebensdauer des Moduls und der berechneten Zeit/Zyklen bis zum Versagen zumindest einer Lötverbindung im Modul unterschieden. Es wird ein beschleunigter thermischer Schock-Dauertest mit einer Testdauer zum Testen des elektronischen Moduls nach Feststellen eines gering robusten Moduldesigns festgelegt. Die Testdauer und die Testgrößenanforderungen des beschleunigten thermischen Schock-Dauertestes werden als Funktion der Feldtemperaturbedingungen, der Auslegelebensdauer und des Produktzuverlässlgkeitsziels des Moduls bestimmt. Eine umfangreiche Absicherung der Zuverlässigkeit von Bauteilen bzw. Baugruppen sowie kompletten Aggregaten ist kaum möglich.

Aufgabe der Erfindung ist es, ein Testprogramm zu generieren, das es erlaubt auf möglichst einfache, aber ausreichend umfangreiche Weise die Zuverlässigkeit von Bauteilen und/oder Baugruppen, sowie kompletten Aggregaten, wie z.B. Brennkraftmaschinen, abzusichern. Weiters dient das Verfahren dazu, eine Bewertung der Zuverlässigkeit von technischen Bauteilen und/oder Baugruppen zu entwickeln, mit der eine möglichst zuverlässige Abschätzung zukünftiger Kostenrisiken möglich ist.

Erfindungsgemäß erfolgt dies durch folgende Schritte:

a) Auswählen zumindest eines kritischen Bauteiles und zumindest eines kritischen Schadensmodus,

b) Definition eines Zuverlässigkeitszieles für jeden kritischen Bauteil,

c) Auswählen zumindest einer Testprozedur für jeden kritischen Bauteil,

d) Zuordnen einer Testdauer und/oder Testlänge zu jeder Testprozedur,

e) Zuordnen von Beschleunigungsfaktoren zu den einzelnen Bauteilen und Testprozeduren,

f) Bestimmen einer äquivalenten Testdauer und/oder Testlänge für den kritischen Bauteil und den jeweiligen Test mittels der Beschleunigungsfaktoren und der Testdauer bzw. Testlänge,

g) Berechnen einer nachweisbaren Zuverlässigkeit für den kritischen Bauteil auf der Basis der gewählten Testprozedur,

h) Vergleichen der nachweisbaren Zuverlässigkeit mit dem Zuverlässigkeitsziel,

i) Modifizieren des Testprogramms, wenn die nachweisbare Zuverlässigkeit vom Zuverlässigkeitsziel abweicht und die Abweichung größer als ein vordefinierter Toleranzwert ist,

wobei die Ergebnisse der einzelnen Tests als Belastungsmatrix für die einzelnen Bauteile dargestellt oder in einer Datenbank abgelegt werden.

Die Beschleunigungsfaktoren können zumindest für eine erste Annäherung geschätzt oder empirisch festgelegt werden. Eine wesentlich genauere Aussage lässt sich aber gewinnen, wenn gemäß einer bevorzugten Ausführung der Erfindung - im Rahmen des Schrittes e) - die Beschleunigungsfaktoren auf der Basis von Schädigungsmodellen ermittelt werden. Dabei werden die in Tests unter erschwerten Bedingungen, beispielsweise erhöhter mechanischer oder thermischer Belastung, nach einer bestimmten Testdauer auftretenden Schädigungen mit jener Dauer verglichen, bei der entsprechende Schädigungen im praktischen Einsatz auftreten. Aus diesen Informationen werden für die kritischen Komponenten und Schädigungsmodi Schädigungsmodelle aufgestellt. Umgekehrt können auch aus bekannten Schädigungsmodellen neue Tests definiert werden.

Die äquivalente Testdauer bzw. Testlänge gibt eine Referenzgröße zur Bewertung der Brauchbarkeit der gewählten Testprozedur.

Dabei wird mindestens eine Testprozedur modifiziert, wenn die nachweisbare Zuverlässigkeit unter dem Zuverlässigkeitsziel liegt. Der Toleranzwert kann hierbei auch null sein.

Eine Modifizierung des Testprogramms wird notwendig, wenn die nachweisbare Zuverlässigkeit unzureichend ist, oder aber auch, wenn unnötig viel oder lange getestet wird. Im ersten Fall kann durch Änderung der Testprozeduren, der Testdauer oder der Beschleunigungsfaktoren die nachweisbare Zuverlässigkeit erhöht werden. Im zweiten Fall kann die Testdauer verkürzt oder Tests eingespart werden.

Weiters können folgende Schritte zur Absicherung der Zuverlässigkeit der Bauteile durchgeführt werden:

j) Vergleichen der äquivalenten Testdauer und/oder Testlänge mit dem Lebensdauerziel,

k) Modifizieren des Testprogramms, wenn die nachweisbare äquivalente Testdauer und/oder Testlänge vom Lebensdauerziel abweicht und die Abweichung größer als ein vordefinierter Toleranzwert ist.

Wenn die äquivalente Testdauer und/oder Testlänge unter dem Lebensdauerziel liegt, kann mindestens einer Testprozedur modifiziert werden. Der Toleranzwert kann auch hier Null oder ungleich Null sein.

Falls die nachweisbare äquivalente Testdauer bzw. Testlänge wesentlich größer ist, als das Lebensdauerziel, kann der Testaufwand durch Verkürzen oder eventueller Einsparung von einzelnen Testprozeduren reduziert werden. Falls jedoch die äquivalente Testdauer bzw. Testlänge das Lebensdauerziel nicht erreicht wird, müssen die Tests verschärft werden. Dies kann beispielsweise durch Steigerung der mechanischen oder thermischen Bauteil-Belastung während der Tests - und damit der Beschleunigungsfaktoren - oder durch Anheben der Testdauer erfolgen.

Vorteilhafterweise können zumindest die Schritte c) bis g), h) und i) und/oder j) und k) solange wiederholt werden, bis die nachweisbare Zuverlässigkeit zumindest dem Zuverlässigkeitsziel entspricht.

Wenn das Zuverlässigkeitsziel durch Dauerlauftests nicht abgesichert werden kann, so können alternativ zusätzliche Komponententests oder FE-Tests (**F**inite **E**lemente-Tests) durchgeführt werden.

Die Ergebnisse der einzelnen Tests werden vorteilhafter Weise als Belastungsmatrix (Load-Matrix) für die einzelnen Bauteile dargestellt und/oder in einer Datenbank abgelegt, wobei vorzugsweise die Zeilen der Belastungsmatrix die einzelnen kritischen Bauteile und Schadensmodi sind.

Auf diese Weise können Haltbarkeit und Ausfallsrisiko von Bauteilen und Baugruppen hinreichend genau abgeschätzt werden und zukünftige Garantiekosten kalkuliert werden.

Das eigentliche Testen der kritischen Bauteile erfolgt nach der Absicherung der Zuverlässigkeit.

Die Erfindung wird im Folgenden anhand der Figuren näher erläutert. Es zeigen

Fig. 1    ein Blockschaubild mit den erfindungsgemäßen Verfahrensschritten,

Fig. 2    ein Detailblatt für Kolbenringverschleiß und

Fig. 3    ein Übersichtsblatt eines Ausführungsbeispieles der Erfindung.

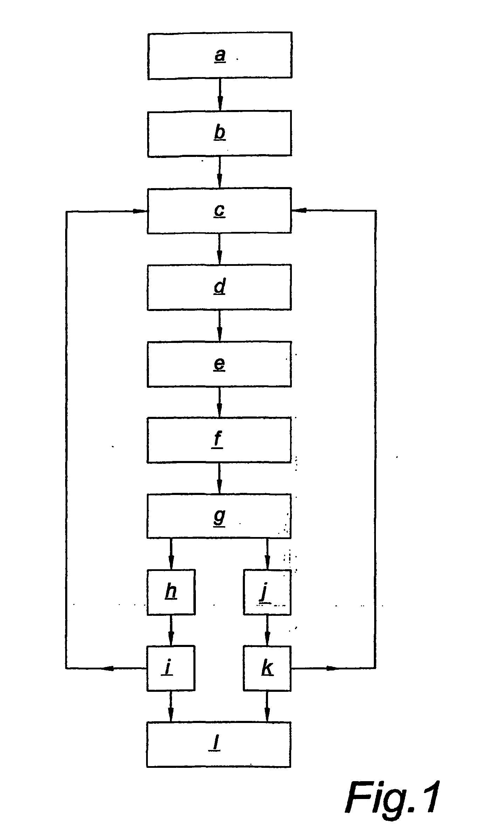

In Fig. 1 wird der Prozess der Erstellung der Belastungsmatrix (Load-Matrix) illustriert. Aus Effizienzgründen ist es sinnvoll, sich auf kritische Komponenten zu beschränken. Die Auswahl dieser Komponenten und Schadensmodi erfolgt in einem ersten Verfahrensschritt a) zum Beispiel im Rahmen einer sogenannten FMEA (**F**ehler **M**öglichkeits- und **E**influss **A**nalyse) unter Berücksichtigung vorhandener Felddaten vergleichbarer Komponenten. Im nächsten Schritt b) erfolgt eine Festlegung der Zuverlässigkeitsziele (Fehlerrate) für eine vorgegebene Nutzungsperiode (z.B. Gewährleistungszeit). Danach werden im Schritt c) die entsprechenden Testprozeduren für jeden kritischen Bauteil ausgewählt und im Schritt d) Testdauer bzw. Testlänge jeder Testprozedur zugeordnet.

Im Schritt e) werden den einzelnen Bauteilen und Testprozeduren Beschleunigungsfaktoren und Testwiederholungszahlen zugeordnet. Zur Ermittlung der Beschleunigungsfaktoren werden Schädigungsmodelle aufgestellt. Dazu wird für den Einsatz im praktischen Betrieb und die Tests Dauer bis zum Auftreten einer bestimmten Schädigung bestimmt. Bei bekanntem Schädigungsmodell können auch neue Tests definiert werden. Durch Vergleichen der Dauer bis zur Schädigung aus dem praktischen Betrieb und den Tests können die Beschleunigungsfaktoren ermittelt werden.

Die Tests (Prüfstand und Fahrzeug) werden für die betrachteten Komponenten in sogenannten Detailblättern der Belastungsmatrix zusammengefasst.

Mittels der Beschleunigungsfaktoren, der Testwiederholungszahlen und der Testdauer und/oder Testlänge wird für den kritischen Bauteil eine äquivalente Testdauer und/oder Testlänge berechnet (Schritt f). Sodann wird im Schritt g) auf der Basis der gewählten Testprozedur eine nachweisbare Zuverlässigkeit für den kritischen Bauteil bestimmt.

Durch Vergleichen der nachweisbaren Zuverlässigkeit mit dem Zuverlässigkeitsziel (Schritt h) und/oder durch Vergleichen der äquivalenten Testdauer mit dem Lebensdauerziel (Schritt j) können Aussagen über die Qualität des Testprogramms und der ausgewählten Testprozedur getroffen werden. Wird das Zuverlässigkeitsziel bzw. das Lebensdauerziel nicht erreicht, so wird in den Schritten i) bzw, k) das Testprogramm bzw. mindestens eine Testprozedur solange modifiziert, bis das Zuverlässigkeitsziel bzw. das Testdauer- und/oder Testlängenziel erreicht wird. Die Schritte c) bis i) bzw. c) bis h), j) und k) werden dazu entsprechend oft wiederholt. Danach können die Testprozeduren in Schritt l) unter Verwendung von statistischen Zuverlässigkeitsverfahren in der Praxis angewendet werden.

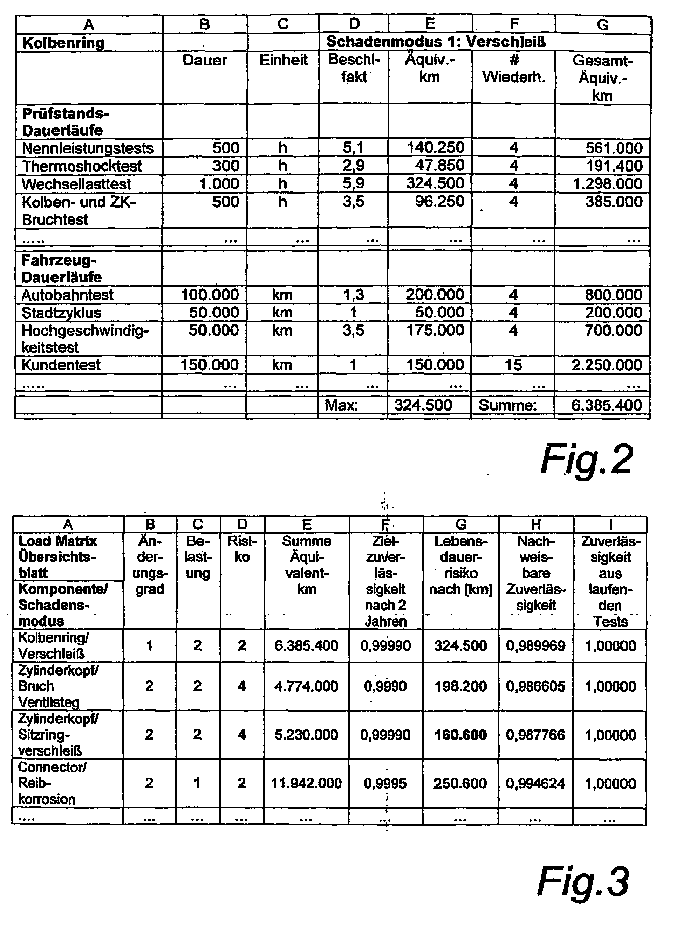

In den Fig. 2 und Fig. 3 ist eine Belastungsmatrix exemplarisch für einen PKW-Motor dargestellt. Sie besteht aus einem Übersichtsblatt (Fig. 3) und einer Reihe von Detailblättern für die kritischen Komponenten und relevanten Schadensmodi. Auf jedem Detailblatt sind alle relevanten Informationen über eine Komponente zusammengefasst, siehe Fig. 2.

In dem in Fig. 2 exemplarisch dargestellten Detailblatt sind in Spalte A die geplanten Versuche für den kritischen Bauteil "Kolbenring" für den Schadensmodus "Verschleiß" aufgelistet. Als Testprozeduren werden Nennleistungstest, Thermoshocktest, Wechsellasttest, Kolben und Zylinderkopf-Bruchtest innerhalb der Prüfstands-Dauerläufe, sowie Autobahntest, Stadtzyklus, Hochgeschwindigkeitstest und Kundentest innerhalb der Fahrzeug-Dauerläufe exemplarisch ausgewählt. Die Spalten B und C zeigen Versuchsdauer und Einheiten (Stunden, Kilometer, etc.) an. Dann folgt in Spalte D der Beschleunigungsfaktor bezogen auf ein standardisiertes Lastprofil. Dieser Beschleunigungsfaktor wird speziell für den jeweils vorliegenden Versuch, die kritische Komponente und den Schadensmodus angegeben. Aus der Laufzeit des Versuches und dem Beschleunigungsfaktor werden die Äquivalenzkilometer berechnet (Spalte E, das ist die schädigungsäquivalente Anzahl von Kilometer im standardisierten Lastkollektiv). In Spalte F ist die Anzahl der Test angegeben, in Spalte G die Summe der Äquivalenzkilometer unter Berücksichtigung der Wiederholungen. Im Detailblatt werden weiters noch die Gesamtsumme aller abgefahrenen Äquivalenzkilometer und das Äquivalenzkilometer-Maximum errechnet. Ist mehr als ein Schadensmodus relevant, werden im Detailblatt weitere Blöcke von Spalten analog zu D bis G erstellt und die entsprechenden Auswertungen (Summe, Maximum) durchgeführt.

Das Belastungsmatrix-Übersichtsblatt (Fig. 3) beinhaltet eine Zusammenfassung aller wichtigen Informationen aus den Detailblättern, sowie Auswertungen für die Evaluierung und Optimierung des Testprogramms. In Spalte A sind die kritischen Komponenten, sowie die relevanten Schadensmodi aufgelistet. Im Beispiel sind der Bauteil "Kolbenring" mit dem Schadensmodus "Verschleiß" aus Fig. 2, sowie der Bauteil "Zylinderkopf" mit den Schadensmodi "Bruch Ventilsteg" und "Sitzringverschleiß" und - als Beispiel für eine elektrische Komponente - der Bauteil "Connector" (elektrische Verbindungskupplung) mit dem Schadensmodus "Reibkorrosion" gewählt. Im Falle einer Weiterentwicklung einer Brennkraftmaschine bzw. eines Upgrades wird eine Einstufung auf Komponentenebene vorgenommen. In den Spalten B und C werden Innovationsgrad und Belastungsniveau der Komponente angegeben. Dabei bezeichnet in Spalte B "1" eine unveränderte Komponente, "2" eine leicht veränderte Komponente und "3" eine völlig neue Komponente. Eine analoge Bewertung wird für das Belastungsniveau verwendet: "1" steht für gleiche oder niedrigere Belastung, "2" für eine leicht erhöhte Belastung und "3" für eine wesentlich höhere Belastung der Komponente oder für den Fall, dass kein Vergleich möglich ist, da eine neue Komponente vorliegt. Spalte D zeigt das Produkt aus Innovationsgrad und Belastungsniveau als Risiko-Prioritätszahl. In der Spalte E sind die Summen der Äquivalentkilometer als Überträge der Detailblätter für die betrachteten Komponenten und den Schadensmodus angegeben. In der Spalte F werden die Zuverlässigkeitszielwerte angeführt. Zuverlässigkeitsziel 0,99990 bedeutet beispielsweise, dass zehn Bauteile von 100.000 einen schwerwiegenden Defekt aufweisen.

Ein zentraler Punkt ist die Identifikation von Risiken bei hoher Laufzeit. Im Übersichtsblatt der Belastungsmatrix wird in Spalte G berechnet, bis zu welcher Laufleistung maximal abgetestet wird. Die Werte ergeben sich aus den maximalen Äquivalenzkilometern der Spalte E der Detailblätter (Fig. 2). Ist dieser Wert für eine kritische Komponente und einen Schadensmodus weit vom Lebensdauerziel entfernt, wird damit das Risiko angezeigt, dass ein erst bei hoher Laufleistung auftretendes Problem in der Testprozedur unter Umständen nicht erkannt wird. Bei einem Lebensdauerziel von beispielsweise 250.000 km wären die aus den Testprozeduren ermittelten Äquivalenzkilometer von 160.600 km für den Bauteil "Zylinderkopf" mit dem Schadensmodus "Sitzringverschleiß" zu gering, so dass mit der gewählten Testprozedur nicht gewährleistet werden kann, dass das Lebensdauerziel wirklich erreicht wird. In diesem Falle könnte beispielsweise eine Steigerung der Dauer der Testprozedur oder Modifizieren der Testprozedur zur Erhöhung des Beschleunigungsfaktors eine Verbesserung der Aussagekraft des Tests bringen.

Die Spalte H zeigt, welche Zuverlässigkeit sich mit dem vorliegenden Versuchsprogramm und vorgegebenen Konfidenzniveau im Idealfall - das heißt während der Versuche treten keine Defekte auf - nachweisen lässt. Hierbei wird im Beispiel näherungsweise eine konstante Ausfallsrate angenommen. Die Berechnung der nachweisbaren Zuverlässigkeit basiert auf folgendem aus der Literatur bekannten Zusammenhang:

$$1-C = R_{Test}{}^{n} \qquad\qquad (1)$$

wobei n die Anzahl der Tests, 1-C das Konfidenzniveau ist (z.B. 0,9 für 90%) und $R_{Test}$ die nachzuweisende Zuverlässigkeit (z.B. 0,9999) bezeichnen. Hier wird vorausgesetzt, dass während der Tests am untersuchten Bauteil keine Schäden auftreten.

Folgende Formel gilt für den Fall, dass in den Tests ein oder mehrere Schäden am Bauteil auftreten:

$$1-C = \sum_{i=0}^{f} \frac{n!}{i!(n-i)!} \cdot (1-R_{test})^{i} \cdot R_{test}{}^{(n-i)}, \qquad\qquad (2)$$

wobei f die Anzahl der maximal "erlaubten" Defekte bezeichnet.

Das Übersichtsblatt der Belastungsmatrix (Load-Matrix) stellt außerdem eine ideale Grundstruktur dar, um Zuverlässigkeitsauswertungen in geschlossener Weise aufzubauen. In Spalte I wird die aktuelle Fehlerrate aus dem laufenden Versuchsprogramm errechnet, wobei die Laufzeiten mit den komponentenspezifischen Beschleunigungsfaktoren gewichtet werden.

Auf der Belastungsmatrix aufbauend, könnten unter Berücksichtigung der angenommenen mittleren Reparaturkosten pro Fall die Gewährleistungskosten abgeschätzt werden.

Die abschließende Evaluierung des gesamten Testprogramms auf Basis der Belastungsmatrix ist von zentraler Bedeutung. Folgende Optimierungsschritte sind mögliche Konsequenzen: Anpassung einzelner Testlängen (Verkürzung oder Erweiterung), Ergänzung durch zusätzliche Tests oder Anpassung der Anzahl der Wiederholungen, Modifikation von bestehenden Testprozeduren.

## Patentansprüche

1. Verfahren zur Absicherung der Zuverlässigkeit von Brennkraftmaschinen und deren Teile, mit einem Testprogramm, mit folgenden Schritten:

   a) Auswählen zumindest eines kritischen Bauteiles und zumindest eines kritischen Schadensmodus,
   b) Definition eines Zuverlässigkeitszieles für jeden kritischen Bauteil,
   c) Auswählen zumindest einer Testprozedur für jeden kritischen Bauteil,
   d) Zuordnen einer Testdauer und/oder Testlänge zu jeder Testprozedur,
   e) Zuordnen von Beschleunigungsfaktoren zu den einzelnen Bauteilen und Testprozeduren, wobei Schädigungsmodelle für die kritischen Bauteile und Schädigungsmodi erstellt werden und die Beschleunigungsfaktoren auf der Basis der Schädigungsmodelle aufgestellt werden,
   f) Bestimmen einer äquivalenten Testdauer und/oder Testlänge für den kritischen Bauteil und den jeweiligen Test mittels der Beschleunigungsfaktoren und der Testdauer bzw. Testlänge,
   g) Berechnen einer nachweisbaren Zuverlässigkeit für den kritischen Bauteil auf der Basis der gewählten Testprozedur,

h) Vergleichen der nachweisbaren Zuverlässigkeit mit dem Zuverlässigkeitsziel,

i) Modifizieren des Testprogramms, wenn die nachweisbare Zuverlässigkeit vom Zuverlässigkeitsziel abweicht und die Abweichung größer als ein vordefinierter Toleranzwert ist,

wobei die Ergebnisse der einzelnen Tests als Belastungsmatrix für die einzelnen Bauteile dargestellt oder in einer Datenbank abgelegt werden.

2. Verfahren insbesondere nach Anspruch 1, **dadurch gekennzeichnet, dass** Schädigungsmodelle für die kritischen Bauteile und Schädigungsmodi erstellt werden und die Beschleunigungsfaktoren auf der Basis der Schädigungsmodelle aufgestellt werden.

3. Verfahren insbesondere nach Anspruch 2, **dadurch gekennzeichnet, dass** das Aufstellen der Schadensmodelle den Schritt des Vergleichens der Dauer bis zum Auftreten einer Schädigung im praktischen Einsatz mit der Dauer bis zum Auftreten gleicher Schädigung im Test beinhaltet.

4. Verfahren insbesondere nach einem der Ansprüche 1 bis 3, **dadurch gekennzeichnet, dass** mindestens eine Testprozedur modifiziert wird, wenn die nachweisbare Zuverlässigkeit unter dem Zuverlässigkeitsziel liegt.

5. Verfahren insbesondere nach einem der Ansprüche 1 bis 4, **dadurch gekennzeichnet, dass** die Schritte c) bis i) solange wiederholt werden, bis die nachweisbare Zuverlässigkeit zumindest dem Zuverlässigkeitsziel entspricht.

6. Verfahren insbesondere nach einem der Ansprüche 1 bis 5, wobei ein Lebensdauerziel für den kritischen Bauteil vordefiniert wird, **gekennzeichnet durch** folgende Schritte:

j) Vergleichen der äquivalenten Testdauer und/oder Testlänge mit dem Lebensdauerziel,

k) Modifizieren des Testprogramms, wenn die nachweisbare äquivalente Testdauer und/oder Testlänge vom Lebensdauerziel abweicht und die Abweichung größer als ein vordefinierter Toleranzwert ist.

7. Verfahren insbesondere nach Anspruch 6, **dadurch gekennzeichnet, dass** mindestens eine Testprozedur modifiziert wird, wenn die äquivalente Testdauer und/ oder Testlänge unter dem Lebensdauerziel liegt.

8. Verfahren insbesondere nach Anspruch 6 oder 7, **dadurch gekennzeichnet, dass** zumindest die Schritte c) bis g), j) und k) solange wiederholt werden, bis die äquivalente Testdauer und/oder Testlänge zumindest dem Lebensdauerziel entspricht.

**Claims**

1. A method for ensuring the reliability of internal combustion engines and the parts thereof, by means of a test program, comprising the following steps:

a) selection of at least one critical component and at least one critical damage mode,

b) definition of a reliability goal for each critical component,

c) selection of at least one test procedure for each critical component,

d) allocation of a test duration and/or test length for each test procedure,

e) allocation of acceleration factors in connection with the individual components and test procedures, with deterioration models for the critical components and deterioration modes being prepared, and the acceleration factors being prepared on the basis of the deterioration models,

f) determination of an equivalent test duration and/or test length for the critical component and the respective test by means of acceleration factors and test duration or test length,

g) calculation of the verifiable reliability for the critical component on the basis of the chosen test procedure,

h) comparison of the verifiable reliability with the reliability goal,

i) modification of the test program when the verifiable reliability deviates from the reliability goal and the deviation is larger than a predefined tolerance value,

with the results of the individual tests being represented as a load matrix for the individual components or being saved in a database.

**2.** A method especially according to claim 1, **characterised in that** deterioration models are prepared for the critical components and deterioration modes, and the acceleration factors are prepared on the basis of the deterioration models.

**3.** A method especially according to claim 2, **characterised in that** the preparation of the damage models contains the step of comparing the duration until the occurrence of a damaging in practical use with the duration until the occurrence of the same damaging in the test.

**4.** A method especially according to one of the claims 1 to 3, **characterised in that** at least one test procedure is modified when the verifiable reliability lies beneath the reliability goal.

**5.** A method especially according to one of the claims 1 to 4, **characterised in that** the steps c) through i) are repeated until the verifiable reliability corresponds at least to the reliability goal.

**6.** A method especially according to one of the claims 1 to 5, with a service life goal being predefined for the critical component, **characterised by** the following steps:

j) comparison of the equivalent test duration and/or test length with the service life goal;
k) modification of the test program when verifiable equivalent test duration and/or test length departs from the service life goal and the departure is larger than a predefined tolerance quantity.

**7.** A method especially according to claim 6, **characterised in that** at least one test procedure is modified when the equivalent test duration and/or test length lies beneath the service life goal.

**8.** A method especially according to claim 6 or 7, **characterised in that** at least the steps c) to g), j) and k) are repeated until the equivalent test duration and/or test length corresponds at least to the service life goal.

**Revendications**

**1.** Procédé pour garantir la fiabilité de moteurs à combustion interne et de leurs pièces, avec un programme d'essai, présentant les étapes suivantes :

a) sélection au moins d'un composant critique et d'au moins une mode d'endommagement critique,
b) définition d'une consigne de fiabilité pour chaque composant critique,
c) sélection d'au moins une procédure d'essai pour chaque compostant critique,
d) association d'une durée d'essai et/ou longueur d'essai à chaque procédure d'essai,
e) association de facteurs d'accélération aux différents composants et procédures d'essai, des modèles d'endommagement pour les composants critiques et les modes d'endommagement étant établis, et les facteurs d'accélération étant établis sur la base des modèles d'endommagement,
f) détermination d'une durée d'essai et/ou longueur d'essai équivalente pour le composant critique et l'essai respectif, au moyen des facteurs d'accélération et de la durée d'essai et/ou longueur d'essai,
g) calcul d'une fiabilité prouvable pour le composant critique, d'après la procédure d'essai sélectionnée,
h) comparaison de la fiabilité prouvable à la consigne de fiabilité,
i) modification du programme d'essai, lorsque la fiabilité prouvable s'écarte de la consigne de fiabilité et que l'écart est supérieur à une valeur de tolérance prédéfinie,

dans lequel les résultats des différents essais sont représentés sous forme de matrice de contraintes pour les différents composants, ou déposés dans une banque de données.

**2.** Procédé selon la revendication 1, **caractérisé en ce que** des modèles d'endommagement pour les composants critiques et les modes d'endommagement sont établis et les facteurs d'accélération sont établis d'après les modèles d'endommagement.

**3.** Procédé selon la revendication 2, **caractérisé en ce que** l'établissement des modèles d'endommagement contient l'étape de comparaison de la durée jusqu'à survenance d'un endommagement en utilisation pratique avec la durée jusqu'à la survenance d'un endommagement identique dans l'essai.

**4.** Procédé selon l'une des revendications 1 à 3, **caractérisé en ce qu'**au moins une procédure d'essai est modifiée, lorsque la fiabilité prouvable est inférieure à à consigne de fiabilité.

**5.** Procédé selon l'une des revendications 1 à 4 , **caractérisé en ce que** les étapes c) à i) sont répétées jusqu'à ce que la fiabilité prouvable correspondre au moins à la consigne de fiabilité.

**6.** Procédé selon l'une des revendications 1 à 5, une consigne de durée de vie étant prédéfinie pour le composant critique, **caractérisé par** les étapes suivantes :

j) comparaison de la durée d'essai et/ou longueur d'essai, équivalente, à la consigne de durée de vie,
k) modification du programme d'essai, lorsque la durée d'essai et/ou longueur d'essai, équivalente, prouvable s'écarte de la consigne de durée de vie et que l'épart est supérieur à une valeur de tolérance prédéfinie.

**7.** Procédé selon la revendication 6, **caractérisé en ce qu'**au moins une procédure d'essai est modifiée, lorsque la durée d'essai et/ou longueur d'essai, équivalente, est inférieure à la consigne de durée de vie.

**8.** Procédé selon la revendication 6 ou 7, **caractérisé en ce qu'**au moins les étapes c) à g), j) et k) sont répétées, jusqu'à ce que la durée d'essai et/ou longueur d'essai, équivalente, corresponde au moins à la consigne de durée de vie.

Fig.1

| A | B | C | D | E | F | G |
|---|---|---|---|---|---|---|
| Kolbenring | | | Schadenmodus 1: Verschleiß | | | |
| | Dauer | Einheit | Beschl-fakt | Äquiv.-km | # Wiederh. | Gesamt-Äquiv.-km |
| Prüfstands-Dauerläufe | | | | | | |
| Nennleistungstests | 500 | h | 5,1 | 140.250 | 4 | 561.000 |
| Thermoshocktest | 300 | h | 2,9 | 47.850 | 4 | 191.400 |
| Wechsellasttest | 1.000 | h | 5,9 | 324.500 | 4 | 1.298.000 |
| Kolben- und ZK-Bruchtest | 500 | h | 3,5 | 96.250 | 4 | 385.000 |
| ..... | ... | ... | ... | ... | ... | ... |
| Fahrzeug-Dauerläufe | | | | | | |
| Autobahntest | 100.000 | km | 1,3 | 200.000 | 4 | 800.000 |
| Stadtzyklus | 50.000 | km | 1 | 50.000 | 4 | 200.000 |
| Hochgeschwindig-keitstest | 50.000 | km | 3,5 | 175.000 | 4 | 700.000 |
| Kundentest | 150.000 | km | 1 | 150.000 | 15 | 2.250.000 |
| ..... | ... | ... | ... | ... | ... | ... |
| | | | Max: | 324.500 | Summe: | 6.385.400 |

## Fig.2

| A | B | C | D | E | F | G | H | I |
|---|---|---|---|---|---|---|---|---|
| Load Matrix Übersichtsblatt Komponente/ Schadensmodus | Änderungsgrad | Belastung | Risiko | Summe Äquivalent-km | Zielzuverlässigkeit nach 2 Jahren | Lebensdauerrisiko nach [km] | Nachweisbare Zuverlässigkeit | Zuverlässigkeit aus laufenden Tests |
| Kolbenring/ Verschleiß | 1 | 2 | 2 | 6.385.400 | 0,99990 | 324.500 | 0,989969 | 1,00000 |
| Zylinderkopf/ Bruch Ventilsteg | 2 | 2 | 4 | 4.774.000 | 0,9990 | 198.200 | 0,986605 | 1,00000 |
| Zylinderkopf/ Sitzring-verschleiß | 2 | 2 | 4 | 5.230.000 | 0,99990 | 160.600 | 0,987766 | 1,00000 |
| Connector/ Reib-korrosion | 2 | 1 | 2 | 11.942.000 | 0,9995 | 250.600 | 0,994624 | 1,00000 |
| .... | ... | ... | ... | ... | ... | ... | ... | ... |

## Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• US 6260998 B1

**In der Beschreibung aufgeführte Nicht-Patentliteratur**

• **Klaus DENKMAYR.** Der AVL-Reliability-Engineering-Prozess für die Motor- und Antriebsstrangentwicklung. *VDI-Berichte,* 2002, vol. 1713, 27-32

• **Klaus DENKMAYR.** AVL's Reliability Process for Engine Development. *Proceedings Annual Reliability and Maintainablity Symposium on product quality and integrity,* 27. Januar 2003, 455-458